# EUROPÄISCHE PATENTSCHRIFT

(11) **EP 4 177 106 B1**
(45) Veröffentlichungstag und Bekanntmachung des Hinweises auf die Patenterteilung: **24.07.2024**
(21) Anmeldenummer: 22202715.3
(22) Anmeldetag: 20.10.2022
(51) Int. Cl.: B60P 7/15, B60P 7/08

(54) **HALTEVORRICHTUNG, SYSTEM, AUFBAU UND VERFAHREN**
HOLDING DEVICE, SYSTEM, ASSEMBLY AND METHOD
DISPOSITIF DE MAINTIEN, SYSTÈME, ASSEMBLAGE ET PROCÉDÉ

(30) Priorität: 29.10.2021 DE 102021128297
(43) Veröffentlichungstag der Anmeldung: 10.05.2023
(73) Patentinhaber: Kögel Trailer GmbH, 89349 Burtenbach (DE)
(72) Erfinder: BIRLE, Günter, 86877 Walkertshofen (DE)
(74) Vertreter: Meissner Bolte Partnerschaft mbB

(56) Entgegenhaltungen:
- DE-A1- 102011 008 254
- DE-A1- 102016 109 636
- GB-A- 2 550 609
- GB-A- 787 750

## Beschreibung

Die Erfindung betrifft eine Haltevorrichtung zur Anbringung an der Innenwand eines Nutzfahrzeugaufbaus mit den Merkmalen des Oberbegriffs des Anspruchs 1. Haltevorrichtungen zur Anbringung an der Innenwand eines Nutzfahrzeugaufbaus oder Verfahren zu deren Herstellung sind beispielsweise aus der DE 10 2016 109 636 A1, der DE10 2011 008 254 A1 oder der GB 787 750 A bekannt. Die Erfindung betrifft ferner ein System mit mehreren Haltevorrichtungen zur Anbringung an der Innenwand eines Nutzfahrzeugaufbaus, einen Nutzfahrzeugaufbau sowie ein Verfahren zur Herstellung einer Haltevorrichtung.

Um nicht stapelfähige Güter übereinander zu transportieren und Sattelauflieger oder andere Nutzfahrzeuge möglichst effizient einzusetzen, wird mit einer Doppelstockbeladung das Nutzvolumen des Fahrzeugs vergrößert. Dazu werden Ladungssicherungsschienen bzw. Etagenschienen verwendet, die an den Innenwänden des Nutzfahrzeugaufbaus befestigt sind und Ladebalken aufnehmen, die sich quer zur Fahrtrichtung erstrecken. Die so gebildete zusätzliche Ladeebene verdoppelt die verfügbaren Palettenstellplätze.

Ein Beispiel für solche Ladungssicherungsschienen ist aus dem eingangs genannten Stand der Technik bekannt. Die bekannten Ladungssicherungsschienen werden aus Blechstreifen hergestellt, die zur Bildung von Stützabschnitten abgekantet werden. Die Stützabschnitte dienen dazu, die Ladungssicherungsschienen an der Innenwand abzustützen. Zwischen den Stützabschnitten werden konturierte Öffnungen in die Blechstreifen gestanzt, die Ladungssicherungselemente bzw. Ladungsbalken aufnehmen.

Die bekannten Ladungssicherungsschienen sind schwierig zu reinigen, da das Innere der Ladungssicherungsschienen schlecht zugänglich ist. Schmutz, der durch die Öffnungen ins Innere der Ladungssicherungsschienen eindringt, kann deshalb nur schwierig entfernt werden. Derartige Ladungssicherungsschienen sind daher aus hygienischen Gründen bspw. für den Transport von Nahrungsmitteln nur eingeschränkt verwendbar.

Der Erfindung liegt die Aufgabe zugrunde, eine Haltevorrichtung zur Anbringung an der Innenwand eines Nutzfahrzeugaufbaus anzugeben, die erhöhten Hygieneanforderungen genügt und flexibel einsetzbar ist. Die Haltevorrichtung soll, ohne darauf eingeschränkt zu sein, für den Einbau in Kühlaufliegern geeignet sein. Der Erfindung liegt ferner die Aufgabe zugrunde, ein System mit mehreren Haltevorrichtungen zur Anbringung an der Innenwand eines Nutzfahrzeugaufbaus, einen Nutzfahrzeugaufbau sowie ein Verfahren zur Herstellung einer Haltevorrichtung anzugeben.

Mit Blick auf die Haltevorrichtung wird die Aufgabe erfindungsgemäß durch den Gegenstand des Anspruchs 1 gelöst. Mit Blick auf das System, den Nutzfahrzeugaufbau und das Verfahren wird die Aufgabe erfindungsgemäß durch die Gegenstände der Ansprüche 10, 11, 12 gelöst.

Konkret wird die Aufgabe durch eine Haltevorrichtung zur Anbringung an der Innenwand eines Nutzfahrzeugaufbaus gelöst, die mehrere, voneinander beabstandete Aufnahmemittel aufweist. Die Aufnahmemittel weisen jeweils einen Aufnahmeraum zum Halten wenigstens eines Ladungsfunktionselements in verschiedenen Positionen auf. Die Aufnahmemittel bilden ein erstes Haltemittel und sind zwischen zwei Schienen angeordnet, die ein zweites Haltemittel bilden. Die Schienen weisen jeweils eine Öffnung für den Eingriff eines weiteren Ladungsfunktionselements auf. Die Aufnahmemittel und die Schienen sind in einem länglichen Grundkörper aus Vollmaterial ausgebildet. Der Aufnahmeraum weist einen geschlossenen Boden auf.

Die Erfindung hat den Vorteil, dass höhere Hygieneanforderungen durch die Ausbildung der Aufnahmemittel und der Schienen in einem länglichen Grundkörper aus Vollmaterial erreicht werden, wobei der Aufnahmeraum einen geschlossenen Boden aufweist. Im Unterschied zum Stand der Technik wird kein umgeformter Blechstreifen, sondern ein Grundkörper aus Vollmaterial verwendet. Die im Stand der Technik vorhandenen Hohlräume zwischen dem abgekanteten Blechstreifen und der Innenwand entfallen bei der Erfindung. Zusätzlich ist erfindungsgemäß vorgesehen, dass der Aufnahmeraum, der das Ladungsfunktionselement im Gebrauch hält, einen geschlossenen Boden aufweist. Damit kann kein Schmutz im montierten Zustand zwischen die Haltevorrichtung und die Innenwand des Nutzfahrzeugaufbaus gelangen. Mit anderen Worten ist die Haltevorrichtung insgesamt geschlossen, so dass weder Schmutz noch Flüssigkeit in die Haltevorrichtung eindringen können. Der sich im Betrieb unweigerlich auf der Oberfläche der Haltevorrichtung ansammelnde Schmutz lässt sich einfach abspülen, ohne dass die Flüssigkeit in die Haltevorrichtung eindringen kann.

Durch die Kombination des ersten und zweiten Haltemittels wird zudem die Flexibilität der Benutzung der Haltevorrichtung erhöht. Dies gilt sowohl für die Befestigung unterschiedlicher Ladungsfunktionselemente an der Haltevorrichtung als auch für die Positionierung der Haltevorrichtung an der Innenwand des Nutzfahrzeugaufbaus. Die längliche Form des Grundkörpers bedeutet, dass der Grundkörper im Nutzfahrzeugaufbau in horizontaler oder senkrechter Positionen verbaut werden kann und durch Kombination mit geeigneten Ladungsfunktionselementen Ladung halten bzw. lagern oder sichern kann. Die Haltevorrichtung wird deshalb auch als Ladungssicherungsschiene bezeichnet.

Die voneinander beabstandeten Aufnahmemittel weisen jeweils einen Aufnahmeraum auf. Der Aufnahmeraum ist dazu vorgesehen und angepasst, das Ladungsfunktionselement zu halten. Beim Halten des Ladungsfunktionselements werden die auf das Ladungsfunktionselement beispielsweise durch die Ladung wirkenden Kräfte sowie die Gewichtskraft des Ladungsfunktionselements über den Aufnahmeraum des Aufnahmemittels und den Grundkörper in die Innenwand des Nutzfahrzeugaufbaus eingeleitet. Diese Funktion ist beispielsweise bei der Verwendung von Ladungssicherungselementen, wie Sperrstangen und dergleichen gegeben, die mit dem Aufnahmeraum bzw. dem Aufnahmemittel verbunden werden können. Dazu greift ein stirnseitiges Ende des Ladungssicherungselements kraftübertragend in den Aufnahmeraum ein. Üblicherweise werden zwei Haltevorrichtungen gegenüberliegend an den jeweiligen Innenwänden des Nutzfahrzeugaufbaus montiert, sodass das Ladungsfunktionselement an beiden Seiten sicher gehalten ist.

Die Form des Aufnahmeraums ist an die Form des Ladungsfunktionselements so angepasst, dass die Haltefunktion ermöglicht wird. Hierfür sind beispielsweise formschlüssige und/oder kraftschlüssige Anpassungen möglich. Die Anpassung des Ladungsfunktionselements erfolgt im Bereich seiner Stirnseite, die im Gebrauch vom Aufnahmeraum aufgenommen wird.

Da die Aufnahmemittel voneinander beabstandet sind, kann das Ladungsfunktionselement in verschiedenen Positionen an der Haltungsvorrichtung angeordnet werden. Die Aufnahmemittel sind diskrete Befestigungsstellen für das Ladungsfunktionselement an verschiedenen Positionen entlang der Haltevorrichtung bzw. entlang des länglichen Grundkörpers der Haltevorrichtung. Es ist selbstverständlich auch möglich, mehrere Ladungsfunktionselemente gleichzeitig mit der Haltevorrichtung zu kombinieren, wobei diese wiederum an verschiedenen Positionen durch die Aufnahmemittel gehalten werden können.

Die beiden Schienen weisen jeweils eine Öffnung auf, in die im Gebrauch ein weiteres Ladungsfunktionselement eingreift. Mit anderen Worten greift das weitere Ladungsfunktionselement in beide Öffnungen der Schienen ein. Die Schienen erstrecken sich entlang des länglichen Grundkörpers und erlauben ein Verschieben des Ladungsfunktionselements. Die Schienen sind zusammen als zweites Haltemittel ausgebildet, das im Gebrauch das weitere Ladungsfunktionselement hält. Die Schienen sind dazu angepasst, die auf das weitere Ladungsfunktionselement wirkenden Kräfte über den Grundkörper in die Innenwand einzuleiten.

Vorzugsweise sind die beiden Schienen identisch ausgebildet. Die beiden Schienen können so ausgebildet sein, dass diese das weitere Ladungsfunktionselement durch ihr Zusammenwirken halten. Dabei kann die eine der beiden Schienen jeweils für die andere Schiene eine Anschlagfunktion übernehmen, die verhindert, dass das Ladungsfunktionselement aus den Schienen seitlich herausrutscht.

Die Öffnungen der beiden Schienen können jeweils schlitzförmig sein.

Der Aufnahmeraum des Aufnahmemittels kann eine Doppelfunktion aufweisen.

Wir oben beschrieben, wirkt der Aufnahmeraum als erstes Haltemittel, um die in das Ladungssicherungselement eingeleiteten Kräfte aufzunehmen. Zusätzlich kann der Aufnahmeraum dazu dienen, das weitere Ladungsfunktionselement, das von den beiden Schienen gehalten wird, in Längsrichtung des Grundkörpers zu halten, um die Position des weiteren Ladungsfunktionselements entlang der Schienen festzulegen. Der Aufnahmeraum des Aufnahmemittels wirkt dabei mit den beiden Schienen dahingehend zusammen, dass der Aufnahmeraum das weitere Ladungsfunktionselement gegen Verschieben sichert. Die Krafteinleitung erfolgt über die Schienen als zweites Haltemittel.

Dazu kann der Aufnahmeraum angepasst sein, um ein Rastelement, bspw. eine Rastfeder oder eine Rastzunge, aufzunehmen, das an einer Innenseite des weiteren Ladungsfunktionselements im Bereich der Stirnseite ausgebildet ist. Das Rastelement ist dazu angepasst, in den Aufnahmeraum einzugreifen, wenn das weitere Ladungsfunktionselement in der gewünschten Position in den Schienen angeordnet ist. In diesem Fall werden die zum Festlegen der Position erforderlichen Rastkräfte in den Aufnahmeraum eingeleitet. Das weitere Ladungsfunktionselement wird dadurch in der gewünschten Position entlang der Schienen gehalten. Ein Beispiel hierfür ist die Befestigung eines Ladebalkens an der Haltevorrichtung, der stirnseitig über ein Rastelement verfügt, das in den Aufnahmeraum eingreift.

Um die Rastkräfte bzw. die in Längsrichtung der Haltevorrichtung wirkenden Verschiebekräfte aufzunehmen und das weitere Ladungsfunktionselement in Längsrichtung der Haltevorrichtung zu halten, kann der Aufnahmeraum als Anschlag in beiden Längsrichtungen ausgebildet sein. Dazu kann beispielsweise die Wandung des Aufnahmeraums mit dessen Boden verbunden sein, um so als Widerlager für die in Längsrichtung wirkenden Verschiebekräfte des weiteren Ladungsfunktionselements zu wirken, so dass das weitere Ladungsfunktionselement in der gewünschten Position arretiert wird. Die Wandung kann dabei den weiter unten beschriebenen Halteflächen entsprechen.

In beiden Fällen wird das Ladungsfunktionselement vom Aufnahmeraum gehalten.

Durch mehrere, voneinander beabstandete Aufnahmemittel kann das Ladungsfunktionselement an verschiedenen Positionen von der Haltevorrichtung gehalten werden bzw. mehrere Ladungsfunktionselemente können von ein und derselben Haltevorrichtung gehalten werden.

Zusammen mit den im länglichen Grundkörper ausgebildeten Aufnahmemitteln und Schienen als erste und zweite Haltemittel wird erfindungsgemäß eine Haltevorrichtung geschaffen, die gut zu reinigen ist und durch die gute Positionierbarkeit in unterschiedlichen Positionen zudem flexibel eingesetzt werden kann. Die beiden Vorteile ergänzen sich, da die erfindungsgemäße Haltevorrichtung neue Anwendungsbereiche im Bereich der Ladungssicherung eröffnet.

Durch die verbesserte Reinigungsfunktion zusammen mit der flexiblen Nutzbarkeit ist die erfindungsgemäße Haltevorrichtung beispielsweise für den Einbau in Kühlaufliegern oder anderen Transporteinheiten mit Kühlfunktion geeignet. Die flexible Nutzbarkeit der Haltevorrichtung ermöglicht es, mit wenigen Gleichteilen ein Ladungssicherungssystem zu schaffen, das erhöhten Hygieneanforderungen genügt.

Bevorzugte Ausführungsformen der Erfindung sind in den Unteransprüchen angegeben.

So können die Aufnahmemittel und die Schienen mit unterschiedlichen Ladungsfunktionselementen kombinierbar sein. Dadurch wird die Funktionalität der Haltevorrichtung erhöht. Die unterschiedlichen Ladungsfunktionselemente können beispielsweise wenigstens ein Ladungssicherungselement, wie eine Stange, insbesondere Sperrstange, und/oder wenigstens einen Ladebalken und/oder wenigstens ein Ladungsfitting umfassen.

Ladungssicherungselemente, wie Sperrstangen, sind dazu vorgesehen, die Ladung beispielsweise am Verrutschen zu hindern. Ein Ladebalken wird beispielsweise dazu verwendet, um eine zusätzliche Ladeebene im Nutzfahrzeugaufbau zu schaffen und nicht stapelbare Güter, beispielsweise auf Paletten, zu lagern. Ladungsfittings sind Einsätze, wie Haken oder Ösen, an denen Seile, Gurte oder Ketten befestigt werden können.

Bei einer weiteren bevorzugten Ausführungsform sind die Aufnahmemittel und die Schienen dazu angepasst, das Ladungsfunktionselement im montierten Zustand in Längsrichtung und quer zur Längsrichtung derart zu halten, dass der Grundkörper waagrecht oder senkrecht an der Innenwand anbringbar ist. Diese Ausführungsform hat den Vorteil, dass die Haltevorrichtung in unterschiedlichen Positionen an der Innenwand befestigt werden kann. Mit anderen Worten kann ein und dieselbe Haltevorrichtung senkrecht oder waagerecht an der Innenwand befestigt werden. Durch die Haltefunktion der Aufnahmemittel und der Schienen sowohl in Längsrichtung der Haltevorrichtung als auch quer zur Längsrichtung der Haltevorrichtung wird erreicht, dass die Ladungsfunktionselemente an der Haltevorrichtung unabhängig davon montiert werden können, ob die Haltevorrichtung senkrecht oder waagerecht an der Innenwand befestigt ist.

Dadurch wird ein hoher Grad an Gleichteilen erreicht, der bei Beibehaltung der Funktionalität der Haltevorrichtung die Herstellungskosten verringert.

Vorzugsweise sind die Aufnahmemittel und die Schienen einreihig ausgebildet. Dies hat den Vorteil, dass Isolationsverluste durch Wärmebrücken verringert werden, die entstehen können, wenn durch Verwendung zweireihiger Haltevorrichtungen Isolationsmaterial verloren geht. Außerdem wird die Flexibilität bei der Positionierung der Haltevorrichtung im Vergleich zu zweireihigen Haltevorrichtungen erhöht.

Erfindungsgemäß ist der Aufnahmeraum durch eine Ausnehmung in einem mittleren Steg der Haltevorrichtung ausgebildet, der an die Schienen angrenzt. Dadurch wird eine robuste Haltevorrichtung geschaffen, deren Aufnahmeräume abgedichtet sind, da die Ausnehmungen im Vollmaterial, d. h. im mittleren Steg des Grundkörpers ausgebildet sind.

Die Aufnahmemittel sind vorzugsweise seitlich zu den Schienen offen. Dies hat den Vorteil, dass Flüssigkeit aus dem Aufnahmeraum des Aufnahmemittels abfließen kann.

Die Aufnahmemittel können profilierte Halteflächen aufweisen, die jeweils paarweise gegenüber angeordnet sind und den Aufnahmeraum begrenzen. Damit ist eine einfache Befestigung des Ladungsfunktionselements möglich.

Die Halteflächen können die weiter oben beschriebene Wandung des Aufnahmeraumes bilden.

Die Halteflächen können Seitenkanten aufweisen, die eine seitliche Öffnung des Aufnahmeraums zu den Schienen begrenzen. Damit ist eine kompakte Ausführung der Haltevorrichtung möglich.

Vorzugsweise sind die Schienen nach innen zu den Aufnahmemitteln hin geöffnet. Diese Ausführungsform beansprucht wenig Bauraum.

Die Schienen können an seitlichen Stegen ausgebildet sein, die sich quer zur Längserstreckung der Schienen nach außen hin erstrecken, wodurch die Krafteinleitung über die Schienen in die Innenwand verbessert wird.

Die Erfindung betrifft ferner ein System mit mehreren Haltevorrichtungen zur Anbringung an der Innenwand eines Nutzfahrzeugaufbaus. Die Haltevorrichtungen weisen jeweils mehrere, voneinander beabstandete Aufnahmemittel auf, die jeweils einen Aufnahmeraum zum Halten wenigstens eines Ladungsfunktionselements in verschiedenen Positionen aufweisen. Die Aufnahmemittel sind zwischen zwei Schienen angeordnet. Die Aufnahmemittel und die Schienen sind in einem länglichen Grundkörper aus Vollmaterial ausgebildet und dazu angepasst, das Ladungsfunktionselement im montierten Zustand in Längsrichtung und quer zur Längsrichtung derart zu halten, dass der Grundkörper waagrecht oder senkrecht an der Innenwand angebracht werden kann.

Das System aus mehreren Haltevorrichtungen hat den Vorteil, dass die Haltevorrichtungen als Gleichteile ausgeführt werden können, die nach Bedarf senkrecht oder waagerecht an der Innenwand des Nutzfahrzeugaufbaus befestigt werden. Es sind also keine besonderen Anpassungen erforderlich, um die Kombination des Ladungsfunktionselements mit der Haltevorrichtung vorzunehmen, je nachdem ob die Haltevorrichtung in senkrechter oder waagrechter Lage positioniert ist.

Die Haltevorrichtungen des erfindungsgemäßen Systems weisen bei einer besonders bevorzugten Ausführungsform jeweils die Merkmale des Anspruchs 1 auf. Bei weiteren bevorzugten Ausführungsformen können Haltevorrichtungen jeweils gemäß den Unteransprüchen 2 bis 10 ausgebildet sein. Die sich aus den Rückbezügen der Ansprüche 1 bis 10 ergebenden Merkmalskombinationen werden auch im Zusammenhang mit dem System offenbart und beansprucht.

Wenn der Aufnahmeraum die weiter oben beschriebene Doppelfunktion aufweisen soll, umfassen die weiteren Ladungsfunktionselemente, die mit den Schienen kombinierbar sind, wie beispielsweise Ladebalken, jeweils ein entsprechendes Rastelement auf, dass in den Aufnahmeraum eingreifen kann, um die Position des Ladungsfunktionselements entlang der Schienen festzulegen. Hierzu wird auf die Erläuterungen weiter oben zu dem Rastelement verwiesen.

Bei einer besonders bevorzugten Ausführungsform umfasst das System wenigstens ein erstes Ladungsfunktionselement, das zur Kombination mit den Aufnahmemitteln vorgesehen ist, sowie wenigstens ein zweites Ladungsfunktionselement, das zur Kombination mit den Schienen vorgesehen ist. Das zweite Ladungsfunktionselement entspricht dem weiter oben genannten weiteren Ladungsfunktionselement und kann beispielsweise ein Ladebalken sein.

Zusätzlich wird ein Nutzfahrzeugaufbau mit wenigstens einer erfindungsgemäßen Haltevorrichtung bzw. einem erfindungsgemäßen System beansprucht.

Beim erfindungsgemäßen Verfahren zur Herstellung der erfindungsgemäßen Haltevorrichtung zur Anbringung an der Innenwand eines Nutzfahrzeugaufbaus mit mehreren, voneinander beabstandeten Aufnahmemitteln, die jeweils einen Aufnahmeraum zum Halten wenigstens eines Ladungsfunktionselements aufweisen, wird der Aufnahmeraum durch eine spanende Bearbeitung, insbesondere durch Fräsen, gebildet.

Die Erfindung wird anhand von Ausführungsbeispielen unter Bezug auf die beigefügten schematischen Zeichnungen 1 bis 7 mit weiteren Einzelheiten näher erläutert. In diesen zeigen
- Fig. 1: die perspektivische Ansicht eines erfindungsgemäßen Ausführungsbeispiels mit zwei Haltevorrichtungen, die senkrecht montiert sind;
- Fig. 2: einen vergrößerten Ausschnitt der Fig. 1 im Bereich der Verbindungen der Ladungsfunktionselemente und der Haltevorrichtungen;
- Fig. 3: die perspektivische Ansicht eines weiteren erfindungsgemäßen Ausführungsbeispiels mit vertikal und horizontal montierten Haltevorrichtungen;
- Fig. 4: einen vergrößerten Ausschnitt der Fig. 3 aus einem anderen Blickwinkel;
- Fig. 5: die perspektivische Ansicht eines weiteren erfindungsgemäßen Ausführungsbeispiels einer Haltevorrichtung mit einem Ladungsfitting, das im geöffneten und geschlossenen Zustand dargestellt ist;
- Fig. 6: das Ladungsfitting gemäß Fig. 5 im geschlossenen Zustand und
- Fig. 7: das Ladungsfitting gemäß Fig. 5 im geöffneten Zustand.

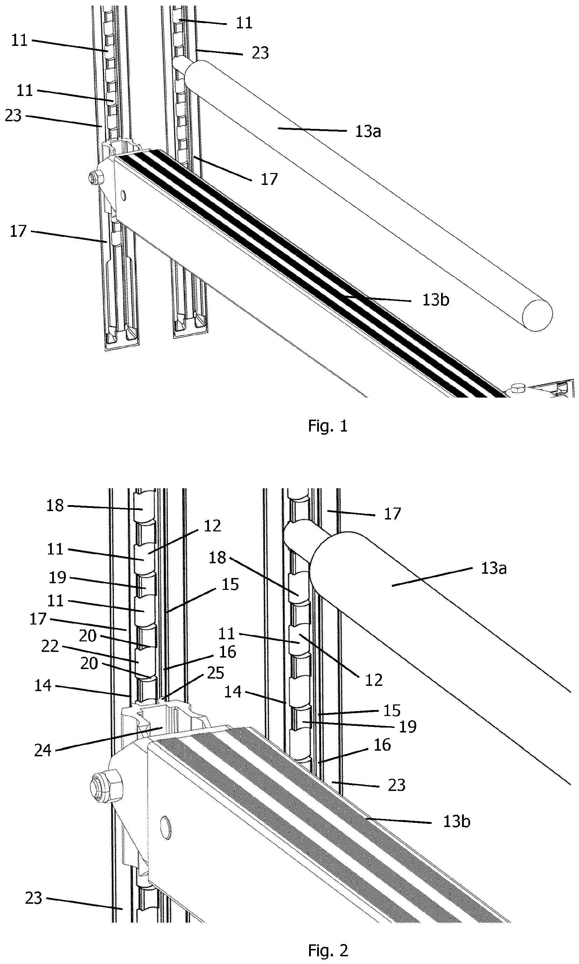

Fig. 1 zeigt ein Ausführungsbeispiel mit zwei vertikalen, nebeneinander angeordneten Haltevorrichtungen, die zur Befestigung an der Innenwand eines Nutzfahrzeugaufbaus vorgesehen sind. Die Innenwand ist nicht dargestellt. Die beiden Haltevorrichtungen können auch als Ladungssicherungsschienen, Etagenschienen oder Ankerschienen bezeichnet werden. Sie haben die Funktion, jeweils wenigstens ein Ladungsfunktionselement 13a, 13b, 13c zu halten. Im Gebrauch sind die Haltevorrichtungen jeweils paarweise an gegenüberliegenden Innenwänden des Nutzfahrzeugs bzw. des Nutzfahrzeugaufbaus befestigt, um die Ladungsfunktionselemente 13a, 13b, 13c an beiden Enden zu halten. In Fig. 1 sind nur die an einer der beiden Innenwände, insbesondere Seitenwände, vorgesehenen Haltevorrichtungen gezeigt.

Die beiden in Fig. 1 gezeigten Haltevorrichtungen sind identisch aufgebaut. Das gilt auch für die in Fig. 1 nicht dargestellten gegenüber angeordneten Haltevorrichtungen.

Bei der Innenwand des Nutzfahrzeugaufbaus kann es sich beispielsweise um die isolierte Innenwand bzw. Seitenwand eines Kühlfahrzeugs handeln. Die Erfindung ist nicht auf derartige Anwendungen eingeschränkt, sondern kann auf andere Nutzfahrzeuge bzw. Nutzfahrzeugaufbauten übertragen werden. Bei dem Nutzfahrzeugaufbau handelt es sich bevorzugt um den Aufbau eines Sattelaufliegers, insbesondere Kühlsattelaufliegers.

Beide Haltevorrichtungen weisen jeweils mehrere, voneinander beabstandete Aufnahmemittel 11 auf, die jeweils einen Aufnahmeraum 12 zum Halten des Ladungsfunktionselements 13a, 13b, 13c umfassen, wie in der vergrößerten Ansicht gemäß Fig. 2 gut zu erkennen. Die Aufnahmemittel 11 bilden einzelne, voneinander beabstandete Befestigungsstellen für ein Ladungsfunktionselement 13a, dass beispielsweise eine Sperrstange sein kann. Andere Ladungsfunktionselemente 13a sind möglich. Die Aufnahmemittel 11 sind identisch ausgebildet und äquidistant voneinander beabstandet. Dadurch ergibt sich eine entsprechende Positioniermöglichkeit entlang der Haltevorrichtung in unterschiedlichen Höhenlagen des Aufbaus.

Die Aufnahmemittel 11 bilden ein erstes Haltemittel, das dazu geeignet ist, die auf das Ladungsfunktionselement 13a wirkenden Kräfte auf die Innenwand zu übertragen.

Jede Haltevorrichtung gemäß Fig. 1 weist zusätzlich zu den Aufnahmemitteln 11 jeweils zwei parallele Schienen 14, 15 auf, zwischen denen die Aufnahmemittel 11 angeordnet sind. Die Schienen 14, 15 bilden ein zweites Haltemittel für ein weiteres Ladungsfunktionselement 13b. Bei dem weiteren Ladungsfunktionselement 13b kann es sich beispielsweise um einen Ladebalken oder Sperrbalken handeln, wie in Fig. 1 gezeigt.

Die Schienen 14, 15 weisen jeweils eine Öffnung 16 auf, in die im montierten Zustand das weitere Ladungsfunktionselement 13b eingreift und gehalten wird. Die Öffnungen 16 sind schlitzförmig ausgebildet und erstrecken sich in Längsrichtung entlang der Schienen 14, 15. Wie in Fig. 2 gezeigt, sind die Öffnungen 16 und die stirnseitigen Enden des Ladungsfunktionselements 13b so abgestimmt, dass die Enden des Ladungsfunktionselements 13b kraftübertragend in die Schienen 14, 15 im montierten Zustand eingreifen können und das Ladungsfunktionselement 13b in Längsrichtung der Schienen 14, 15 verschieblich lagern. Dazu weist das Ladungsfunktionselement 13b einen stirnseitig angeordneten Schuh 24 auf, dessen freies Ende (im nicht montierten Zustand) Führungsstege 25 aufweist, die so profiliert sind, dass diese in die schlitzförmigen Öffnungen 16 passen. Andere Befestigungsmöglichkeiten des Ladungsfunktionselements 13b an den Schienen 14, 15 sind möglich.

Die Öffnungen 16 der beiden Schienen 14, 15 sind so zueinander ausgerichtet, dass das Ladungsfunktionselement 13b ähnlich wie bei einer Bahnschiene verliersicher geführt wird. Dabei wirken die beiden Schienen 14, 15 zusammen als gegenseitige, seitliche Anschläge, die verhindern, dass das Ladungsfunktionselement 13b seitlich aus der jeweiligen Schiene 14, 15 herausrutschen kann.

Die beiden Schienen 14, 15 sind hinsichtlich Form und Dimension identisch ausgebildet und unterscheiden sich nur in der Öffnungsrichtung, die, wie in Fig. 2 gezeigt, jeweils nach innen bezogen auf die Haltevorrichtung weist. Eine andere Öffnungsrichtung, d. h. nach außen bezogen auf die Haltevorrichtung ist auch möglich. Der Schuh 24 ist dann entsprechend anzupassen.

Zusammen mit der Haltevorrichtung bildet das Ladungsfunktionselement 13b ein Schlittensystem, das einerseits das Ladungsfunktionselement 13b kraftübertragend lagert und andererseits eine Verschiebung des Ladungsfunktionselements 13b entlang der Haltevorrichtung erlaubt.

Das Ladungsfunktionselement 13a, 13b, 13c wird zusammen mit den Haltevorrichtungen als ein System, insbesondere Ladungssicherungssystem offenbart und beansprucht, das in einem Nutzfahrzeugaufbau verbaut werden kann. Das System weist üblicherweise mehrere Ladungsfunktionselemente 13a, 13b, 13c auf, die gleich oder unterschiedlich sein können. Beispielsweise können Ladebalken und Sperrstangen als Ladungsfunktionselemente im Rahmen des Systems verwendet werden. Bei den Haltevorrichtungen, die ebenfalls im Rahmen des Systems verwendet werden, sind wenigstens 2, insbesondere 4, 6 oder mehr Haltevorrichtungen als Gleichteile ausgebildet. Vorzugsweise sind alle Haltevorrichtungen als Gleichteile ausgebildet. Dabei ist es unschädlich, wenn einige wenige Haltevorrichtungen unterschiedlich sind. Der Vorteil, die Fertigungskosten zu senken, wird erreicht, wenn zumindest eine Mehrzahl der Haltevorrichtungen als Gleichteile ausgebildet sind.

Wie in den Figuren 1, 2 ferner zu erkennen, sind die Haltevorrichtungen jeweils einreihig ausgebildet. Dies bedeutet, dass eine Haltevorrichtung zwei Schienen 14, 15 und dazwischen eine Reihe von Aufnahmemittel 11 aufweist. Im Unterschied dazu weisen mehrreihige Haltevorrichtungen mehr als zwei Schienen und mehr als eine Reihe von Aufnahmemitteln 11 je Haltevorrichtung auf.

Wie in Fig. 2 weiterhin gut zu erkennen, sind die Aufnahmemittel 11 zwischen den beiden Schienen 14, 15 angeordnet. Dadurch wird eine platzsparende Bauweise der Haltevorrichtung sowie die oben angesprochene Doppelfunktion der Aufnahmemittel ermöglicht.

In Fig. 2 ist ferner gut zu erkennen, dass die Aufnahmemittel 11 und die Schienen 14, 15 in einem länglichen Grundkörper 17 ausgebildet sind. Der Grundkörper 17 ist aus Vollmaterial hergestellt. Darin unterscheidet sich der Grundkörper 17 von einem abgekanteten Blechstreifen, der durch eine Verformung zwar eine vergleichbare Höhe aufweist, aber innen hohl ist. Der Grundkörper 17 ist als Vollmaterialkörper nach außen, d. h. in Richtung des Ladevolumens des Nutzfahrzeugaufbaus geschlossen. Zumindest der Aufnahmeraum 12 des Aufnahmemittels 11 ist geschlossen und weist einen entsprechenden Boden 18 auf. Entsprechendes gilt für die Schienen 14, 15, die im Inneren ebenfalls geschlossen sind. Vorzugsweise ist der Grundkörper 17 vollständig geschlossen.

Die Ausbildung der Schienen und Aufnahmemittel 11 in dem länglichen Grundkörper 17 aus Vollmaterial hat den Vorteil, dass zu der Innenwand hin, also auf der Rückseite der Haltevorrichtung keine Durchbrüche vorhanden sind, durch die Schmutz oder Flüssigkeit zwischen die Haltevorrichtung und die Innenwand gelangen kann. Mit anderen Worten ist die Haltevorrichtung frei von Durchbrüchen.

Im Gebrauch sind die Ladungsfunktionselemente 13a, 13b, 13c parallel angeordnet und erstrecken sich quer zur Fahrtrichtung.

Nachfolgend wird das erste Haltemittel, nämlich die Aufnahmemittel 11, näher beschrieben. Die Aufnahmemittel 11 weisen, wie oben erläutert, jeweils einen Aufnahmeraum 12 auf. Der Aufnahmeraum 12 ist durch eine Ausnehmung gebildet, die sich in einem mittleren Steg 19 des Grundkörpers 17 befindet. Dies bedeutet, dass der Boden 18 der Ausnehmung bzw. des Aufnahmeraumes 12 tiefer als die Oberseite des mittleren Stegs 19 angeordnet ist. Mit anderen Worten weist der mittlere Steg 19 gleichmäßige Unterbrechungen auf, welche die Ausnehmungen bzw. Aufnahmeräume 12 bilden. Der mittlere Steg 19 grenzt damit die einzelnen Aufnahmeräume 12 in Längsrichtung der Haltevorrichtung voneinander ab und bildet einzelne Vorsprünge, die sich in Längsrichtung der Haltevorrichtung zwischen den Aufnahmeräumen 12 befinden.

Wie in Fig. 2 zu sehen, grenzt der mittlere Steg 19 seitlich an die Schienen 14, 15 an, die sich auf beiden Seiten des mittleren Stegs 19 erstrecken. Der mittlere Steg 19 trennt die beiden Schienen 14, 15 quer zur Längserstreckung der Haltevorrichtung. Die Ausnehmungen im mittleren Steg 19 werden durch ein spanendes Fertigungsverfahren, beispielsweise durch Fräsen eingebracht. Andere Fertigungsverfahren sind möglich.

Wie in Fig. 2 weiter zu erkennen, sind die Aufnahmemittel 11, konkret die Aufnahmeräume 12 seitlich zu den Schienen 14, 15 hin offen und bilden zwei gegenüber angeordnete seitliche Öffnungen 22. Der mittlere Steg 19 umschließt die Aufnahmeräume 12 nicht vollständig, sondern grenzt diese hauptsächlich in Längsrichtung der Haltevorrichtung voneinander ab. Durch die seitlichen Öffnungen 22 der Aufnahmeräume 12 kann Flüssigkeit aus den Aufnahmeräumen 12 einfach abfließen.

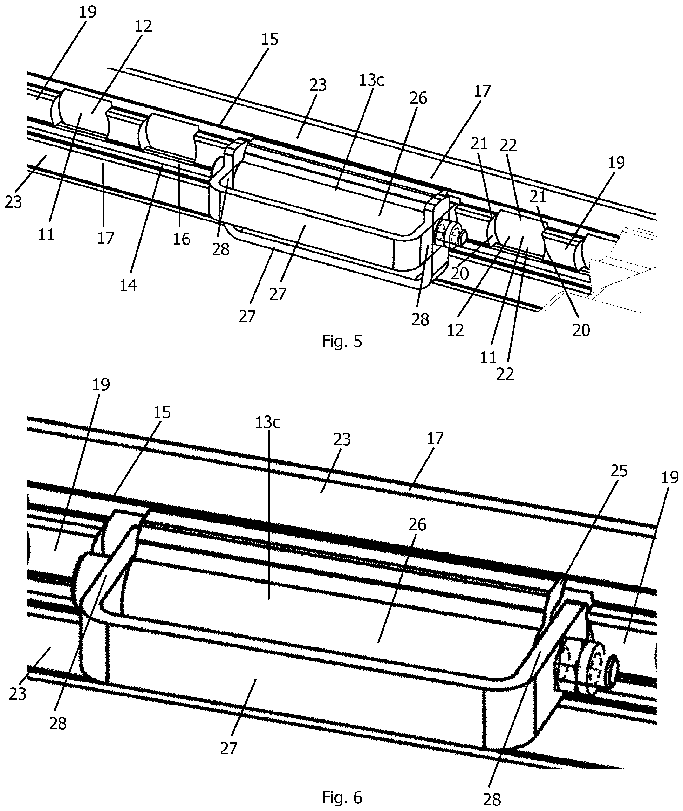

Die Figuren 2, 5 zeigen weitere Details des Aufnahmeraums 12, nämlich die profilierten Halteflächen 20. Diese sind jeweils paarweise gegenüber angeordnet und begrenzen den Aufnahmeraum 12. Die Halteflächen 20 bilden die weiter oben beschriebene Wandung des Aufnahmeraumes 11. Im Beispiel gemäß Fig. 5 und gemäß Fig. 2 sind die Halteflächen 20 gekrümmt ausgebildet. Eine andere Profilierung ist möglich. Beispielsweise können die Halteflächen 20 eckig ausgebildet sein und gerade Flanken aufweisen.

In Fig. 2 ist gut zu erkennen, dass die Profilierung der Halteflächen 20 an die Form der stirnseitigen Enden des Ladungsfunktionselements 13a angepasst ist, das im vorliegenden Beispiel zylindrisch ist. Die Krümmung der Halteflächen 20 entspricht der Krümmung der stirnseitigen Enden des Ladungsfunktionselements 13a. Die Haltefunktion wird durch die formschlüssige Verbindung erfüllt. Es versteht sich, dass andere Profilpaarungen, die zu einer formschlüssigen Verbindung führen, möglich sind. Kraftschlüssige Verbindungen sind möglich.

Fig. 5 zeigt weiter, dass die Halteflächen 20 jeweils zwei Seitenkanten 21 aufweisen, welche die seitliche Öffnung 22 des Aufnahmeraums 12 zu den Schienen 14, 15 hin begrenzen. Die Seitenkanten 21 ergeben sich daraus, dass der mittlere Steg 19 den jeweiligen Aufnahmeraum 12 nicht vollständig umschließt, sondern die seitliche Öffnung 22 freilässt. Dies ist auch daran gut erkennbar, dass der Boden 18, wie in Fig. 5 gezeigt, in einer Richtung quer zur Längserstreckung der Haltevorrichtung breiter als der mittlere Steg 19 ist.

Der Grundkörper 17 weist seitliche Stege 23 auf, die auf beiden Seiten des Grundkörpers 17 ausgebildet sind und sich entlang der Längserstreckung der Haltevorrichtung in Längsrichtung der Haltevorrichtung erstrecken. Die seitlichen Stege 23 bilden zumindest abschnittsweise eine Auflagefläche des Grundkörpers 17, die im montierten Zustand an der Innenwand anliegt. Die seitlichen Stege 23 bestimmen die Breite der Haltevorrichtung.

Die Schienen 14, 15 sind an bzw. in den seitlichen Stegen 23 ausgebildet.

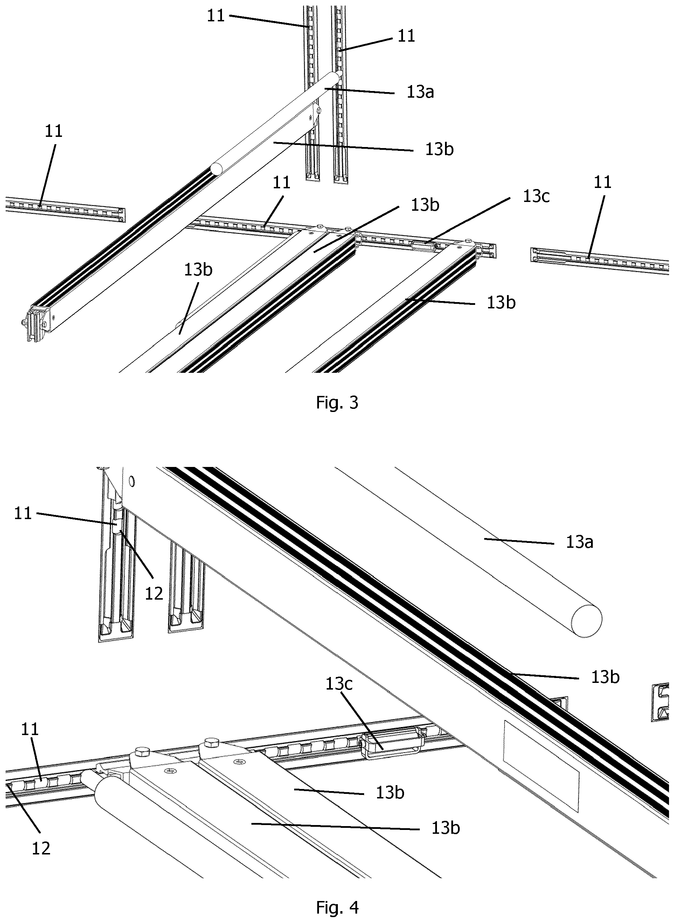

Die Figuren 3, 4 zeigen die Kombination mehrerer Haltevorrichtungen in unterschiedlichen Positionen, konkret senkrecht und waagerecht angeordnete Haltevorrichtungen. Damit kann ein und derselbe Typ von Haltevorrichtung (Gleichteil) sowohl senkrecht als auch waagrecht an der Innenwand des Nutzfahrzeugaufbaus befestigt werden. Dies wird dadurch ermöglicht, dass das erste und zweite Haltemittel sowohl in Längsrichtung der Haltevorrichtung als auch quer zur Längsrichtung der Haltevorrichtung eine Haltekraft auf das jeweilige Ladungsfunktionselement 13a, 13b, 13c ausüben kann. Besonders vorteilhaft ist dabei die oben beschriebene Doppelfunktion des Aufnahmeraums 12 einerseits als erstes Haltemittel für das Ladungsfunktionselement und andererseits zum axialen Festlegen des weiteren Ladungsfunktionselements, das in den Schienen als zweites Haltemittel gelagert ist.

Zum axialen Festlegen sind die Halteflächen 20 der Aufnahmemittel 11 bzw. allgemein die Wandung des Aufnahmeraums 12 als Anschläge für das Rastelement des weiteren Ladungsfunktionselements ausgebildet. Dies wird dadurch erreicht, dass die Halteflächen 20 mit dem Boden 18 der Aufnahmemittel 11 verbunden sind. Bei dem vorliegenden Ausführungsbeispiel erfolgt dies dadurch, dass die Halteflächen 20 einstückig mit dem Boden 18 ausgebildet sind, da der Grundkörper 17 aus Vollmaterial ausgebildet ist.

Die Halteflächen 20 bzw. die Wandung erstreckt sich senkrecht zur Bewegungsrichtung des weiteren Ladungsfunktionselements und blockiert dieses.

Fig. 5 zeigt die Einzelheiten eines weiteren Ladungsfunktionselements 13c in der Form eines Ladungsfittings bzw. Fittings 13c, das auch in den Figuren 3, 4 gezeigt ist. Das Fitting 13c kann beispielsweise zum Einhängen von Gurten oder Seilen verwendet werden.

Dies bedeutet, dass mindestens 3 unterschiedliche Ladungsfunktionselemente 13a, 13b, 13c mit ein und derselben Haltevorrichtung kombiniert werden können.

Das Fitting 13c gemäß Fig. 5 weist eine Basis 26 auf, die ähnlich, wie der Schuh 24 des Ladebalkens bzw. des weitere Ladungsfunktionselements 13b durch Führungsstege 25 mit den beiden Schienen 14, 15 verbunden werden kann. An der Basis 26 ist ein verschwenkbarer Bügel 27 vorgesehen, der in Fig. 5 in zwei Positionen, nämlich der Löse bzw. Verschiebeposition und der Arretierposition gezeigt ist.

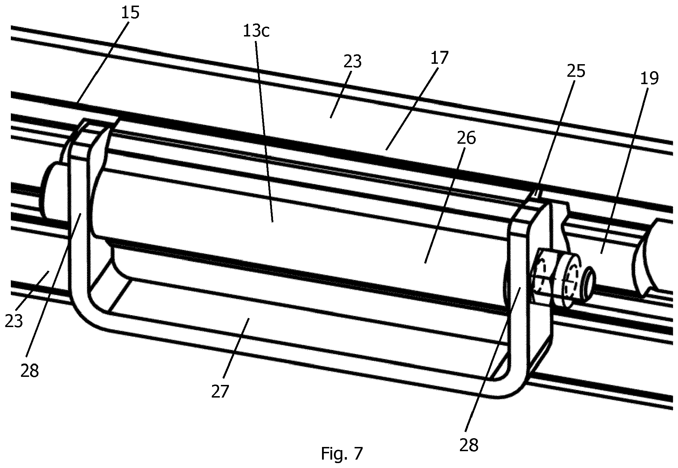

Die einzelnen Positionen des Bügels 27 sind in den Figuren 6, 7 detailliert dargestellt, wobei Fig. 6 die Arretierposition und Fig. 7 die Löse- bzw. Verschiebeposition zeigt.

Der Bügel 27 weist zwei Schenkel 28 auf, deren Länge so bemessen ist, dass diese in der in Fig. 6 gezeigten Arretierposition in den Aufnahmeraum 12 hineinragen. Damit liegen die freien Enden der Schenkel 28 an den Halteflächen 20 innen an und blockieren eine Verschiebebewegung des Fittings 13c in Längsrichtung der Haltevorrichtung. Dies gilt für beide Seiten des Fittings 13c. Die Unterseite der Basis 26 ist so geformt, dass diese über den mittleren Steg 19 bzw. die den mittleren Steg 19 bildenden Vorsprünge bewegt werden kann. Die Unterseite der Basis 26 ist also höher oder als die Höhe des mittleren Stegs 19.

Fig. 7 zeigt dasselbe Fitting 13c in der Löse- bzw. Verschiebeposition, in der die beiden Schenkel 28 durch Verschwenken des Bügels 27 außer Eingriff mit dem Aufnahmeraum 12 sind. Dazu sind die beiden Schenkel 28 einfach nach außen gedreht, sodass diese im Wesentlichen parallel zum Boden 18 des Aufnahmeraums 12 angeordnet sind. Das Fitting 13c kann so frei verschoben werden. Zum Verschwenken des Bügels 27 sind die beiden Schenkel 28 drehbar mit der Basis 26 verbunden, wie in Fig. 7 gut zu sehen.

### Bezugszeichenliste

- 11: Aufnahmemittel
- 12: Aufnahmeraum
- 13a, 13b, 13c: Ladungsfunktionselement
- 14, 15: Schienen
- 16: Öffnung Schiene
- 17: Grundkörper
- 18: Boden
- 19: Steg
- 20: Halteflächen
- 21: Seitenkanten
- 22: seitliche Öffnung
- 23: seitliche Stege
- 24: Schuh
- 25: Führungsstege
- 26: Basis
- 27: Bügel
- 28: Schenkel

## Patentansprüche

1. Haltevorrichtung zur Anbringung an der Innenwand eines Nutzfahrzeugaufbaus mit mehreren, voneinander beabstandeten Aufnahmemitteln (11), die jeweils einen Aufnahmeraum (12) zum Halten wenigstens eines Ladungsfunktionselements (13a, 13b, 13c) in verschiedenen Positionen aufweisen, wobei die Aufnahmemittel (11) ein erstes Haltemittel bilden und zwischen zwei Schienen (14, 15) angeordnet sind, die ein zweites Haltemittel bilden und jeweils eine Öffnung (16) für den Eingriff eines weiteren Ladungsfunktionselements (13a, 13b, 13c) aufweisen, **dadurch gekennzeichnet, dass** die Aufnahmemittel (11) und die Schienen (14, 15) in einem länglichen Grundkörper (17) aus Vollmaterial ausgebildet sind und der Aufnahmeraum (12) einen geschlossenen Boden (18) aufweist, wobei der Aufnahmeraum (12) durch eine Ausnehmung in einem mittleren Steg (19) ausgebildet ist, der an die Schienen (14, 15) angrenzt.

2. Haltevorrichtung nach Anspruch 1,
**dadurch gekennzeichnet, dass**
die Aufnahmemittel (11) und die Schienen (14, 15) mit unterschiedlichen Ladungsfunktionselementen (13a, 13b, 13c), insbesondere mit wenigstens einem Ladungssicherungselement (13a) und/oder einem Ladebalken (13b) und/oder einem Ladungsfitting (13c), kombinierbar sind.

3. Haltevorrichtung nach Anspruch 1 oder 2,
**dadurch gekennzeichnet, dass**
die Aufnahmemittel (11) und die Schienen (14, 15) dazu angepasst sind, das Ladungsfunktionselement (13a, 13b, 13c) im montierten Zustand in Längsrichtung und quer zur Längsrichtung derart zu halten, dass der Grundkörper (17) waagrecht oder senkrecht an der Innenwand anbringbar ist.

4. Haltevorrichtung nach einem der vorhergehenden Ansprüche,
**dadurch gekennzeichnet, dass**
die Aufnahmemittel (11) und die Schienen (14, 15) einreihig ausgebildet sind.

5. Haltevorrichtung nach einem der vorhergehenden Ansprüche,
**dadurch gekennzeichnet, dass**
die Aufnahmemittel (11) seitlich zu den Schienen (14, 15) hin offen sind.

6. Haltevorrichtung nach einem der vorhergehenden Ansprüche,
**dadurch gekennzeichnet, dass**
die Aufnahmemittel (11) profilierte Halteflächen (20) aufweisen, die jeweils paarweise gegenüber angeordnet sind und den Aufnahmeraum (12) begrenzen.

7. Haltevorrichtung nach Anspruch 6,
**dadurch gekennzeichnet, dass**
die Halteflächen (20) Seitenkanten (21) aufweisen, die eine seitliche Öffnung (22) des Aufnahmeraumes (12) zu den Schienen (14, 15) hin begrenzen.

8. Haltevorrichtung nach einem der vorhergehenden Ansprüche,
**dadurch gekennzeichnet, dass**
die Schienen (14, 15) nach Innen zu den Aufnahmemitteln (11) hin geöffnet sind.

9. Haltevorrichtung nach einem der vorhergehenden Ansprüche,
**dadurch gekennzeichnet, dass**
die Schienen (14, 15) an seitlichen Stegen (23) ausgebildet sind, die sich quer zur Längserstreckung der Schienen (14, 15) nach Außen erstrecken.

10. System mit mehreren Haltevorrichtungen zur Anbringung an der Innenwand eines Nutzfahrzeugaufbaus nach einem der vorhergehenden Ansprüche.

11. Nutzfahrzeugaufbau mit wenigstens einer Haltevorrichtung nach Anspruch 1 oder mit einem System nach Anspruch 10.

12. Verfahren zur Herstellung einer Haltevorrichtung nach Anspruch 1 zur Anbringung an der Innenwand eines Nutzfahrzeugaufbaus mit mehreren, voneinander beabstandeten Aufnahmemitteln (11), die jeweils einen Aufnahmeraum (12) zur Verbindung mit wenigstens einem Ladungsfunktionselement (13a, 13b, 13c) aufweisen, bei dem der Aufnahmeraum (12) durch eine spanende Bearbeitung, insbesondere durch Fräsen, gebildet wird.

## Claims

1. A holding device for attachment to the inner wall of a commercial vehicle body, having multiple mutually spaced receiving means (11), which each have a receiving space (12) for holding at least one load functional element (13a, 13b, 13c) in different positions, wherein the receiving means (11) form a first holding means and are arranged between two rails (14, 15) which form a second holding means and each have an opening (16) for the engagement of a further load functional element (13a, 13b, 13c),
**characterised in that**
the receiving means (11) and the rails (14, 15) are formed in an elongate main body (17) consisting of solid material, and the receiving space (12) has a closed bottom (18), wherein the receiving space (12) is formed by a recess in a middle ridge (19) which is adjacent to the rails (14, 15).

2. The holding device according to Claim 1,
**characterised in that**
the receiving means (11) and the rails (14, 15) can be combined with different load functional elements (13a, 13b, 13c), in particular with at least one load-securing element (13a) and/or a loading beam (13b) and/or a load fitting (13c).

3. The holding device according to Claim 1 or 2,
**characterised in that**
the receiving means (11) and the rails (14, 15) are adapted to hold the load functional element (13a, 13b, 13c) in the mounted state in the longitudinal direction and transversely to the longitudinal direction such that the main body (17) can be attached to the inner wall horizontally or vertically.

4. The holding device according to one of the preceding claims,
**characterised in that**
the receiving means (11) and the rails (14, 15) are formed in a single row.

5. The holding device according to one of the preceding claims,
**characterised in that**
the receiving means (11) are laterally open towards the rails (14, 15).

6. The holding device according to one of the preceding claims,
**characterised in that**
the receiving means (11) have profiled holding faces (20), which are arranged in pairs opposite one another and delimit the receiving space (12).

7. The holding device according to Claim 6,
**characterised in that**
the holding faces (20) have side edges (21) which delimit a lateral opening (22) of the receiving space (12) towards the rails (14, 15).

8. The holding device according to one of the preceding claims,
**characterised in that**
the rails (14, 15) are inwardly open towards the receiving means (11).

9. The holding device according to one of the preceding claims,
**characterised in that**
the rails (14, 15) are formed on lateral flanges (23) which extend outwards transversely to the longitudinal extent of the rails (14, 15).

10. A system having multiple holding devices for attachment to the inner wall of a commercial vehicle body according to one of the preceding claims.

11. A commercial vehicle body having at least one holding device according to Claim 1 or having a system according to Claim 10.

12. A method for producing a holding device according to Claim 1 for attachment to the inner wall of a commercial vehicle body, having multiple mutually spaced receiving means (11), which each have a receiving space (12) for connection to at least one load functional element (13a, 13b, 13c), in which method the receiving space (12) is formed by machine-cutting, in particular by milling.

## Revendications

1. Dispositif de maintien, destiné à être monté sur la paroi intérieure d'une carrosserie de véhicule utilitaire, pourvu de plusieurs moyens de réception (11) écartés les uns des autres, dont chacun comporte un espace de réception (12) destiné à maintenir au moins un élément fonctionnel de chargement (13a, 13b, 13c) dans différentes positions, les moyens de réception (11) constituant un premier moyen de maintien et étant placés entre deux glissières (14, 15), qui constituent un deuxième moyen de maintien et dont chacune comporte un orifice (16) pour l'engagement d'un élément fonctionnel de chargement (13a, 13b, 13c) supplémentaire,
**caractérisé en ce que**
les moyens de réception (11) et les glissières (14, 15) sont conçus dans un corps de base (17) allongé en matière pleine et **en ce que** l'espace de réception (12) comporte un fond inférieur (18) fermé, l'espace de réception (12) étant conçu par un évidement dans une barrette (19) centrale qui est adjacente aux glissières (14, 15) .

2. Dispositif de maintien selon la revendication 1,
**caractérisé en ce que**
les moyens de réception (11) et les glissières (14, 15) sont associables avec différents éléments fonctionnels de chargement (13a, 13b, 13c), notamment avec au moins un élément de sécurisation du chargement (13a) et / ou avec une barre de chargement (13b) et / ou un raccord de chargement (13c).

3. Dispositif de maintien selon la revendication 1 ou 2,
**caractérisé en ce que**
les moyens de réception (11) et les glissières (14, 15) sont adaptés pour maintenir l'élément fonctionnel de chargement (13a, 13b, 13c) à l'état monté dans la direction longitudinale et à la transversale de la direction longitudinale, de telle sorte que le corps de base (17) soit susceptible d'être monté à l'horizontale ou à la verticale sur la paroi intérieure.

4. Dispositif de maintien selon l'une quelconque des revendications précédentes,
**caractérisé en ce que**
les moyens de réception (11) et les glissières (14, 15) sont conçus sur une seule rangée.

5. Dispositif de maintien selon l'une quelconque des revendications précédentes,
**caractérisé en ce que**
les moyens de réception (11) sont ouverts latéralement vers les glissières (14, 15).

6. Dispositif de maintien selon l'une quelconque des revendications précédentes,
**caractérisé en ce que**
les moyens de réception (11) comportent des surfaces de maintien (20) profilées, qui sont placées en vis-à-vis par paires et qui délimitent l'espace de réception (12) .

7. Dispositif de maintien selon la revendication 6,
**caractérisé en ce que**
les surfaces de maintien (20) comportent des arêtes latérales (21) qui délimitent un orifice (22) latéral de l'espace de réception (12) en direction des glissières (14, 15).

8. Dispositif de maintien selon l'une quelconque des revendications précédentes,
**caractérisé en ce que**
les glissières (14, 15) sont ouvertes vers l'intérieur sur les moyens de réception (11).

9. Dispositif de maintien selon l'une quelconque des revendications précédentes,
**caractérisé en ce que**
les glissières (14, 15) sont conçues sur des barrettes (23) latérales, qui s'étendent vers l'extérieur, à la transversale de l'extension longitudinale des glissières (14, 15).

10. Système pourvu de plusieurs dispositifs de maintien destinés à être montés sur la paroi intérieure d'une carrosserie de véhicule utilitaire selon l'une quelconque des revendications précédentes.

11. Carrosserie de véhicule utilitaire pourvue d'au moins un dispositif de maintien selon la revendication 1 ou pourvue d'un système selon la revendication 10.

12. Procédé, destiné à fabriquer un dispositif de maintien selon la revendication 1, prévu pour être monté sur la paroi intérieure d'une carrosserie de véhicule utilitaire, pourvu de plusieurs moyens de réception (11) écartés les uns des autres, dont chacun comporte un espace de réception (12) pour la liaison avec au moins un élément fonctionnel de chargement (13a, 13b, 13c), lors duquel l'espace de réception (12) est constitué par un usinage par enlèvement de copeaux par fraisage.
